(19) Europäisches Patentamt

European Patent Office

Office européen des brevets

(11) **EP 4 603 365 A1**

(12) **EUROPEAN PATENT APPLICATION**

(43) Date of publication:
**20.08.2025 Bulletin 2025/34**

(21) Application number: **25156790.5**

(22) Date of filing: **10.02.2025**

(51) International Patent Classification (IPC):
**B62D 5/04** (2006.01)

(52) Cooperative Patent Classification (CPC):
**B62D 5/0463;** B62D 1/16; B62D 15/0235

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.02.2024 JP 2024020171**

(71) Applicant: **JTEKT CORPORATION
Kariya-shi, Aichi-ken, 448-8652 (JP)**

(72) Inventors:
• **KAKIMOTO, Yusuke
Kariya-shi, Aichi-ken,, 448-8652 (JP)**
• **AONO, Shinya
Kariya-shi, Aichi-ken,, 448-8652 (JP)**

(74) Representative: **Winter, Brandl - Partnerschaft
mbB
Alois-Steinecker-Straße 22
85354 Freising (DE)**

(54) **TURNING CONTROL DEVICE**

(57)     A turning control device includes a processor. The processor is configured to execute a turning-corresponding angle acquisition process, a rudder angle variable estimation process, a basic assist torque setting process, an adjusting torque calculation process, and a manipulation process. The basic assist torque setting process is a process of setting the value of a basic assist torque variable depending on a steering torque. The adjusting torque calculation process is a process of calculating the value of an adjusting torque variable. The manipulation process includes a process of manipulating a drive circuit of an assist motor (42), so as to control the torque of the assist motor (42) to a torque depending on the sum of a torque indicated by the value of the basic assist torque variable and a torque indicated by the value of the adjusting torque variable.

FIG. 1

EP 4 603 365 A1

**Description**

BACKGROUND OF THE INVENTION

1. Field of the Invention

The present invention relates to a turning control device.

2. Description of Related Art

For example, Japanese Unexamined Patent Application Publication No. 2003-205846 (JP 2003-205846 A) describes a device that transmits the torque of a steering wheel to a turning wheel through a steering shaft, an intermediate shaft, and a transmitting shaft. The steering shaft and the intermediate shaft, and the intermediate shaft and the transmitting shaft, are each coupled by a universal j oint. Further, the device includes a motor that applies a torque to the intermediate shaft.

Further, the torque of an assist motor that assists the manipulation of the steering wheel is controlled depending on a value resulting from adding an adjusting torque to an assist torque depending on a steering torque. The adjusting torque includes a torque depending on a steering angle or a time-differential value of the steering angle. Examples of the adjusting torque include a torque that is set depending on the steering angle for returning the steering angle to a neutral position when hands are disengaged from the steering wheel.

SUMMARY OF THE INVENTION

In the case where the universal joint is included as described above, the ratio between the steering angle that is the rotation angle of the steering shaft and the rotation angle of the transmitting shaft varies depending on the steering angle. The inventor has studied the giving of the torque of the assist motor to a position that is closer to the turning wheel than to the universal joint. In that case, when the adjusting torque is set depending on the rotational angle of the transmitting shaft that is determined depending on the rotation angle of the assist motor, the adjusting torque can unintentionally vary depending on the steering angle. The variation can give a feeling of strangeness to a driver.

A turning control device according to an aspect of the present invention is configured to control a turning device. The turning device includes a steering wheel, an input shaft, an intermediate shaft, an output shaft, a first Cardan joint, a second Cardan joint, an assist motor, and a turning wheel. The input shaft is coupled to the steering wheel. The first Cardan joint is a member that couples the input shaft and the intermediate shaft. The second Cardan joint is a member that couples the intermediate shaft and the output shaft. The turning wheel is configured such that a steering torque input to the steering wheel is transmitted through the input shaft, the intermediate shaft, and the output shaft. The assist motor is configured to apply a torque to a position that is closer to the turning wheel than to the second Cardan joint. The turning control device includes a processor. The processor is configured to execute a turning-corresponding angle acquisition process, a rudder angle variable estimation process, a basic assist torque setting process, an adjusting torque calculation process, and a manipulation process. The turning-corresponding angle acquisition process is a process of acquiring a turning-corresponding angle depending on a detection value of a sensor as an input variable. The turning-corresponding angle is a variable indicating a turning angle of the turning wheel. The detection value of the sensor is a detection value of a physical amount at the position that is closer to the turning wheel than to the second Cardan joint. The rudder angle variable estimation process is a process of estimating the value of a rudder angle variable based on the turning-corresponding angle as an input variable. The rudder angle variable is a variable indicating a steering angle or a time-differential value of the steering angle. The steering angle is the angle of the steering wheel. The basic assist torque setting process is a process of setting the value of a basic assist torque variable depending on the steering torque. The adjusting torque calculation process is a process of calculating the value of an adjusting torque variable based on the value of the rudder angle variable as an input variable. The manipulation process includes a process of manipulating a drive circuit of the assist motor, so as to control the torque of the assist motor to a torque depending on the sum of a torque indicated by the value of the basic assist torque variable and a torque indicated by the value of the adjusting torque variable.

In the above configuration, the ratio between the turning-corresponding angle and the steering angle periodically varies depending on the steering angle. Hence, in the above configuration, the value of the adjusting torque variable is calculated using the value of the rudder angle variable estimated by the rudder angle variable estimation process. Therefore, the value of the adjusting torque variable can be set to an appropriate value depending on the steering angle or the change rate of the steering angle.

In the turning control device according to the aspect of the present invention, the rudder angle variable may include a variable indicating the steering angle. The manipulation process may be a process of controlling the torque of the assist motor to a torque depending on a value resulting from dividing the sum of the torque indicated by the value of the basic assist torque variable and the torque indicated by the value of the adjusting torque variable by the value of a ratio variable. The ratio variable may be a variable that periodically varies depending on the value of the variable indicating the steering angle as an input variable and that indicates the ratio of the steering torque to a torque at the position that is closer to the turning wheel than to the second Cardan joint.

The value of the above ratio variable varies depending on the steering angle. Hence, in the above configuration, the torque of the assist motor is controlled to the torque depending on the value resulting from dividing the sum of the torque indicated by the value of the basic assist torque variable and the torque indicated by the value of the adjusting torque variable by the value of the ratio variable. Thereby, it is possible to restrain the variation in the torque that is applied to the steering wheel when the above sum is an amount that does not periodically vary depending on the steering angle.

In the turning control device according to the aspect of the present invention, the rudder angle variable may include a variable indicating the steering angle and a variable indicating the time-differential value of the steering angle. The adjusting torque calculation process may include a target backing process. The target backing process may include a process of setting a target value of the variable indicating the time-differential value, depending on the value of the variable indicating the steering angle as an input variable, and a process of setting the value of a target backing torque variable, depending on a manipulated amount in a feedback control in which the variable indicating the time-differential value is a controlled amount and the target value is a target value of the controlled amount. The adjusting torque variable may include the target backing torque variable.

The above target value needs to be set to a value indicating an appropriate steering angle velocity depending on the steering angle. However, in the case where the target value is determined based on the turning-corresponding angle, the target value can unintentionally vary depending on the steering angle. Hence, in the above configuration, the variable indicating the steering angle is employed as an input variable in the target backing process. Thereby, the target value can be set to an appropriate value depending on the steering angle.

In the turning control device according to the aspect of the present invention, the rudder angle variable may include a variable indicating the steering angle. The adjusting torque calculation process may include an active return process. The active return process includes a process of calculating the value of a return torque variable for returning the steering angle to a neutral position, based on the variable indicating the steering angle as an input variable. The adjusting torque variable may include the return torque variable.

The above active return process is a process of setting an appropriate torque for returning the steering angle to the neutral position, depending on the steering angle. However, in the case where the value of the return torque variable is determined based on the turning-corresponding angle, the value of the return torque variable can unintentionally vary. Hence, in the above configuration, the variable indicating the steering angle is employed as an input variable in the active return process. Thereby, it is possible to restrain the value of the return torque variable from unintentionally varying.

In the turning control device according to the aspect of the present invention, the rudder angle variable may include a variable indicating the time-differential value of the steering angle. The adjusting torque calculation process may include a damping process. The damping process may be a process of calculating the value of a damping torque variable, based on the value of the variable indicating the time-differential value as an input variable. The damping torque variable may be a variable that has the reverse sign of the time-differential value. The adjusting torque variable may include the damping torque variable.

The above damping process is a process of setting an appropriate torque for giving stickiness to the manipulation of the steering wheel, depending on the steering angle velocity. However, in the case where the value of the damping torque variable is determined based on the time-differential value of the turning-corresponding angle, the value of the damping torque variable can unintentionally vary because of the difference between the steering angle velocity and the time-differential value of the turning-corresponding angle. Hence, in the above configuration, the variable indicating the time-differential value of the steering angle is employed as an input variable in the damping process. Thereby, it is possible to restrain the value of the damping torque variable from unintentionally varying.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram showing the configuration of a turning control system according to an embodiment;
FIG. 2 is a diagram showing the configuration of a first Cardan joint according to the embodiment;
FIG. 3 is a block diagram showing processes that are executed by a control device according to the embodiment;
FIG. 4 is a block diagram showing details of an assist amount setting process of the processes shown in FIG. 3;
FIG. 5 is a diagram exemplifying the relation between a pinion angle and a handle angle according to the embodiment; and
FIG. 6 is a time chart exemplifying the effect of the embodiment.

DETAILED DESCRIPTION OF EMBODIMENTS

An embodiment will be described below with reference to the drawings.

System Configuration

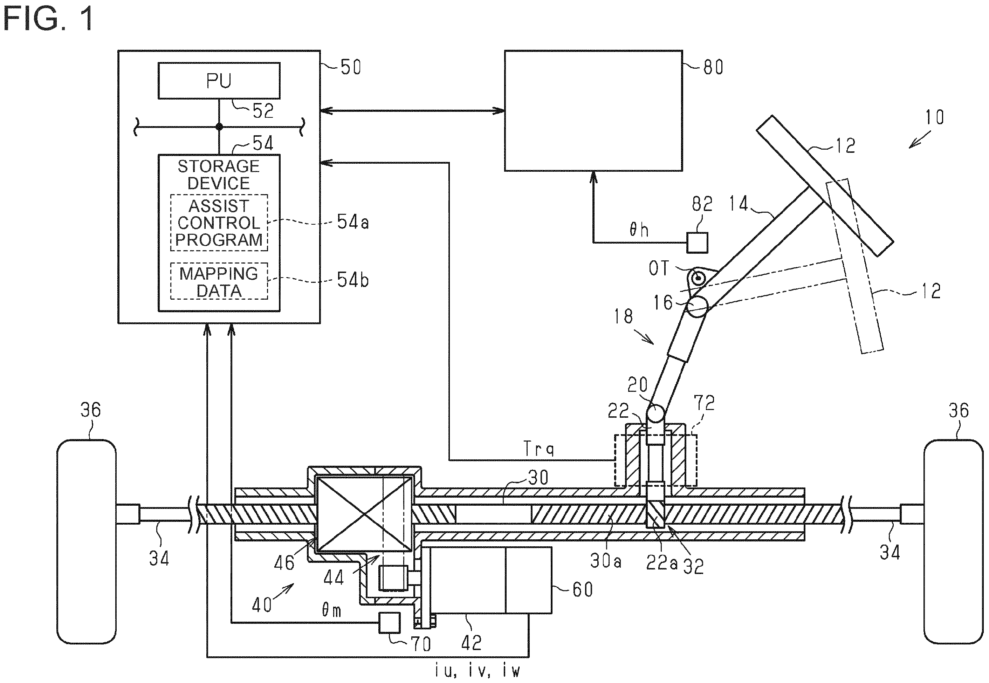

As shown in FIG. 1, the turning device 10 is a device that turns turning wheels 36 in the cooperation between the steering torque that is input to a steering wheel 12 by a driver and the dynamic power of a turning actuator 40. The turning device 10 is an electric power steering device. Hereinafter, manipulating the steering wheel 12 in the right direction or the left direction is referred to as "steering".

The steering wheel 12 is fixed to a column shaft 14. The column shaft 14 is mechanically coupled to an intermediate shaft 18 through a first Cardan joint 16. The intermediate shaft 18 has a well-known contractible configuration. Of two end portions of the intermediate shaft 18 in the axial direction of the intermediate shaft 18, an end portion on the reverse side of an end portion that is coupled to the first Cardan joint 16 is coupled to a pinion shaft 22 through a second Cardan joint 20. The column shaft 14 is an example of the input shaft.

The pinion shaft 22 is disposed so as to have a predetermined crossing angle with a rack shaft 30. A rack-and-pinion mechanism 32 is configured by the engagement between a rack tooth 30a formed on the rack shaft 30 and a pinion tooth 22a formed on the pinion shaft 22. Further, tie rods 34 are coupled to both ends of the rack shaft 30. Distal ends of the tie rods 34 are coupled to unillustrated knuckles to which the turning wheels 36 are secured. By the rack-and-pinion mechanism 32, the rotation manipulation of the steering wheel 12 is transformed into the displacement action of the rack shaft 30 in the axial direction of the rack shaft 30. The displacement action in the axial direction is transmitted to the knuckles through the tie rods 34, and thereby, the turning angle of the turning wheel 36 is changed. The turning angle is the moving angle of a tire that is the turning wheel 36. The pinion shaft 22 is an example of the output shaft.

The turning actuator 40 includes an assist motor 42 that is a drive source, a transmission mechanism 44 that transmits the torque of the assist motor 42, and a ball screw mechanism 46. The ball screw mechanism 46 transforms the torque of the assist motor 42 that is transmitted through the transmission mechanism 44, into the power for the displacement of the rack shaft 30 in the axial direction. As an example, the assist motor 42 is a three-phase brushless motor. The output voltage of an inverter 60 is applied to a terminal of the assist motor 42.

The control device 50 includes a PU 52 and a storage device 54. The PU 52 is a software processing device that includes at least one of a CPU, a GPU, and the like.

The control device 50 manipulates the inverter 60 for controlling the controlled amount of the turning wheel 36 as a controlled object. For the control of the controlled amount, the control device 50 refers to a rotation angle $\theta m$ of the assist motor 42 that is detected by a rotation angle sensor 70. Further, the control device 50 refers to electric currents iu, iv, iw that are output by the inverter 60. The electric currents iu, iv, iw may be detected as voltage drop amounts at shunt resistors provided on respective legs of the inverter 60. Further, the control device 50 refers to a detection value Trq of a torque sensor 72. The detection value Trq is a detection value of the torque that is applied to the pinion shaft 22. The torque sensor 72 is a sensor that detects the torque depending on the torsion angle of a well-known torsion bar provided at the pinion shaft 22. The inverter 60 is an example of the drive circuit.

A superior ECU 80 is an electronic control device that generates a command that is relevant to the control of the vehicle and that is superior to the control device 50. The superior ECU 80 refers to a steering angle $\theta h$ that is detected by a rudder angle sensor 82. The steering angle $\theta h$ is the rotational angle of the steering wheel 12. In other words, the steering angle $\theta h$ is the rotational angle of the column shaft 14.

The control device 50 and the superior ECU 80 can communicate with each other. Moreover, the control device 50 can receive the steering angle $\theta h$ that is acquired by the superior ECU 80. The sampling period of the steering angle $\theta h$ is longer than the sampling period of the rotation angle $\theta m$.

Cardan Joint

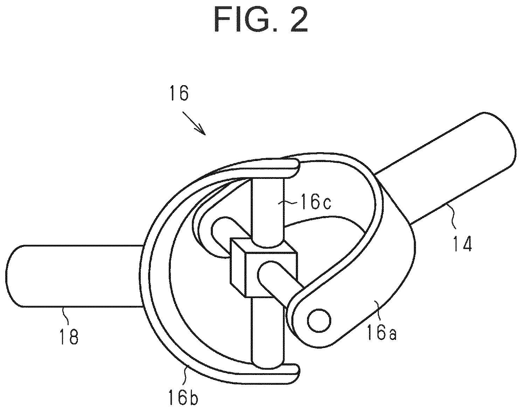

FIG. 2 shows the configuration of the first Cardan joint 16.

The first Cardan joint 16 includes a first yoke 16a, a second yoke 16b, and a joint cross 16c. The joint cross 16c has a cross shape. The joint cross 16c couples the first yoke 16a and the second yoke 16b in a mutually rotatable manner. The first yoke 16a is fastened to an end portion of the column shaft 14 by a bolt. The first yoke 16a may be welded to the end portion of the column shaft 14. The second yoke 16b is fixed to an end portion of the intermediate shaft 18 by welding.

The configuration of the second Cardan joint 20 is the same as the configuration of the first Cardan joint 16, and therefore, the description about the configuration of the second Cardan joint 20 is omitted.

Variation in Torque Due to Cardan Joint

A ratio f(Θh) (= Th / Trq) between a steering torque Th that is a torque that is applied to the steering wheel 12 and a torque that is applied to the pinion shaft 22 has a relation that is expressed as the following Expression (c1).

$$f(\theta h) = \frac{cos\alpha 1 \cdot cos\alpha 2}{(1 - sin^2\alpha 1 \cdot sin^2\theta h) \cdot \left[1 - sin^2\alpha 2\{sin(arctan(tan\theta h \cdot cos\alpha 1)) + \phi\}\right]^2} \cdots (c1)$$

Here, a bend angle $\alpha 1$ of the first Cardan joint 16, a bend angle $\alpha 2$ of the second Cardan joint 20, and a phase difference $\psi$ are used. The bend angle $\alpha 1$ of the first Cardan joint 16 is the angle between the axial direction of the column shaft 14 and the axial direction of the intermediate shaft 18. Further, the bend angle $\alpha 2$ of the second Cardan joint 20 is the angle between the axial direction of the intermediate shaft 18 and the axial direction of the pinion shaft 22. The phase difference $\psi$ is "90 - $\xi$ + $\varepsilon$". Here, "$\xi$" is the angle between a plane parallel to both of the axial direction of the column shaft 14 and the axial direction of the intermediate shaft 18 and a plane parallel to both of the axial direction of the intermediate shaft 18 and the axial direction of the pinion shaft 22. Further, "$\varepsilon$" is the phase difference between the second yoke 16b that is of the two yokes of the first Cardan joint 16 and that is on the intermediate shaft 18 side and the yoke that is of the two yokes of the second Cardan joint 20 and that is on the intermediate shaft 18 side. The phase difference indicates a gap in rotational angle around the axial direction of the intermediate shaft 18.

According to the above Expression (c1), for example, in the case where the torque that is applied to the pinion shaft 22 is constant without depending on the steering angle $\theta h$, the steering torque Th can vary depending on the steering angle $\theta h$. In the case where the steering torque Th varies depending on the steering angle $\theta h$, the driver can have a feeling of strangeness about the manipulation of the steering wheel 12. A control for coping with this will be described below.

Torque Control for Assist Motor

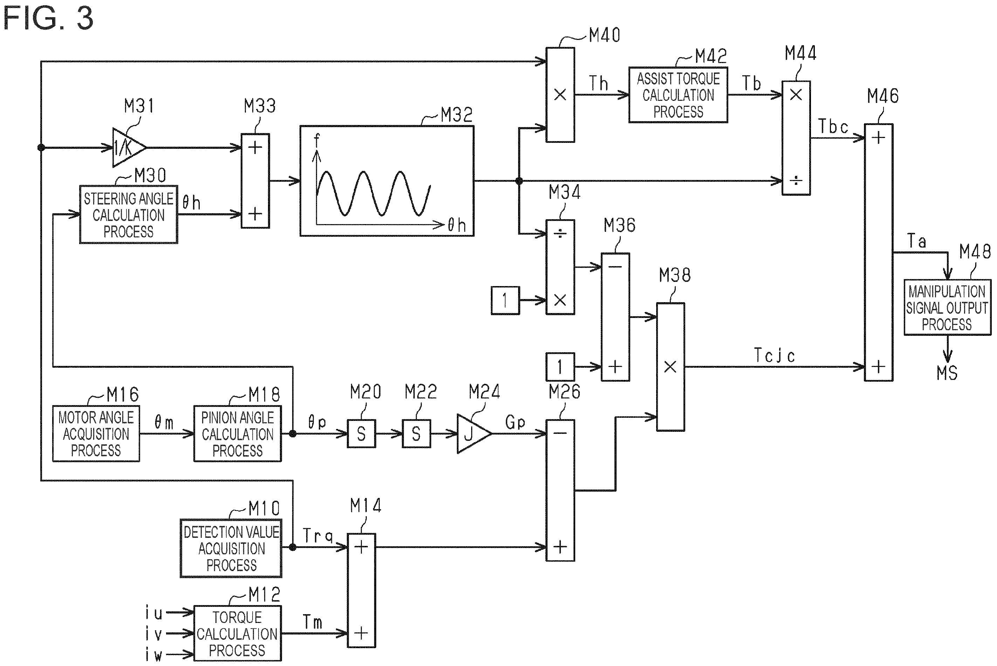

FIG. 3 shows processes that are executed by the control device 50. The processes shown in FIG. 3 are realized when the PU 52 repeatedly executes an assist control program 54a stored in the storage device 54, for example, with a predetermined period.

A detection value acquisition process M10 is a process of acquiring the detection value Trq by the torque sensor 72 with a predetermined sampling period.

A torque calculation process M12 is a process of calculating a motor torque Tm that is a torque generated in the assist motor 42, based on the electric currents iu, iv, iw that flow through the assist motor 42. Actually, the motor torque Tm is a torque resulting from converting the torque of the assist motor 42 into the torque of the pinion shaft 22.

An addition process M14 is a process of adding the detection value Trq and the motor torque Tm.

A motor angle acquisition process M16 is a process of calculating the rotation angle $\theta m$ of a rotation shaft of the assist motor 42 with a predetermined sampling period. The motor angle acquisition process M16 is an example of a steering angle variable acquisition process.

A pinion angle calculation process M18 is a process of calculating a pinion angle $\theta p$ that is the rotation angle of the pinion shaft 22, based on the rotation angle $\theta m$ as an input variable.

A differential operator M20 is a process of calculating a first-order time-differential value based on the pinion angle $\theta p$ as an input variable. The pinion angle $\theta p$ is an example of the turning-corresponding angle.

A differential operator M22 is a process of calculating a first-order time-differential value based on the output value of the differential operator M20 as an input variable.

An inertia term calculation process M24 is a process of outputting an inertia term Gp that is a value resulting from multiplying the output value of the differential operator M22 by an inertia coefficient J. The output value of the differential operator M22 is a second-order time-differential value of the pinion angle $\theta p$, and therefore, the output value of the inertia term calculation process M24 corresponds to the inertia torque of the turning device 10.

A subtraction process M26 is a process of subtracting the output value of the inertia term calculation process M24 from the output value of the addition process M14.

A steering angle calculation process M30 is a process of calculating the steering angle $\theta h$ based on the pinion angle $\theta p$ as an input variable. The steering angle calculation process M30 is a process of calculating the steering angle $\theta h$ using a mapping that is prescribed by mapping data 54b stored in the storage device 54 shown in FIG. 1. The mapping is a mapping that receives the pinion angle $\theta p$ as an input and that outputs the steering angle $\theta h$. The mapping is prescribed by the following Expression (c2)

$$\theta h = -arctan \frac{tan\left[-arctan\left\{\frac{tan\left(\theta p + arctan(tan\phi \cdot cos\alpha2)\right)}{cos\alpha2}\right\} + \phi\right]}{cos\alpha1} \cdots (c2)$$

The above expression is derived by applying an expression that prescribes the relation between the rotation angles and bend angles of a pair of the yokes of a Cardan joint, to the first Cardan joint 16 and the second Cardan joint 20.

That is, the above expression is derived by using a simultaneous equation including the following expressions (c3) and (c4).

$$\tan\theta2 = \cos\alpha1 \cdot \tan\theta h \ ... \ (c3)$$

$$\tan(\theta p') = \cos\alpha2 \cdot \tan(\theta2 + \psi) \ ... \ (c4)$$

The above "θ2" is the rotation angle of the intermediate shaft 18. Further, "θp'" indicates the phase difference of the pinion angle θp from "θh". Specifically, the following Expression (c5) is derived from Expression (c3) and Expression (c4).

$$\theta p' = arctan(tan[arctan\{tan(\theta h) \cdot cos(\alpha1)\} + \psi] \cdot cos(\alpha2)) \ ... \ (c5)$$

Accordingly, the pinion angle θp is expressed as the following Expression (c6).

$$\theta p = \theta p' - arctan\{tan(\psi) \cdot cos(\alpha2)\} \ ... \ (c6)$$

The above Expression (c2) is derived by eliminating θp' from Expression (c5) and Expression (c6).

The mapping data 54b includes data about values of the first bend angle α1, the second bend angle α2, and the phase difference ψ, and the like. The above Expression (c1) is calculated based on the ratio between a first-order time-differential value of the steering angle θh and the first-order time-differential value of the pinion angle θp and an expression for energy conservation. The ratio between the first-order time-differential value of the steering angle θh and the first-order time-differential value of the pinion angle θp can be calculated by the time differential of the above Expression (c2).

A rigidity coefficient multiplication process M31 is a process of multiplying the detection value Trq by the reciprocal of a rigidity coefficient K. The rigidity coefficient K is a coefficient indicating the torsional rigidity of the torsion bar. A steering angle correction process M33 is a process of correcting the steering angle θh by multiplying the steering angle θh output by the steering angle calculation process M30 by the output value of the rigidity coefficient multiplication process M31. The steering angle θh determined from the above Expression (c2) deviates from the actual steering angle by the torsional amount of the torsion bar. An amount resulting from multiplying the detection value Trq by the reciprocal of the rigidity coefficient K is an estimated value of the torsional amount of the torsion bar.

A ratio calculation process M32 is a process of calculating the ratio f(θh) between the torque of the pinion shaft 22 and the steering torque Th. For example, the ratio f(θh) may be expressed as the above Expression (c1). That is, the ratio f(θh) may be calculated by the PU 52 using Expression (c1), by storing data prescribing the above Expression (c1) in the storage device 54. Further, for example, the map computation of the ratio f(θh) may be performed by the PU 52, in a state where map data is previously stored in the storage device 54. The map data is data in which the steering angle θh is adopted as an input variable and the ratio f(θh) is adopted as an output variable.

The map data is combination data of discrete values of the input variable and values of the output variable that correspond to the respective values of the input variable. Further, in the map computation, in the case where the value of the input variable coincides with one of the values of the input variable in the map data, the corresponding value of the output variable in the map data may be adopted as the computation result. Further, in the map computation, in the case where the value of the input variable does not coincide with any of the values of the input variable in the map data, a value obtained by the interpolation with a plurality of values of the output variable that is included in the map data may be adopted as the computation result. Alternatively, in the map computation, in the case where the value of the input variable does not coincide with any of the values of the input variable in the map data, the closest value of the plurality of values of the input variable that is included in the map data may be adopted, and the corresponding value of the output variable in the map data may be adopted as the computation result.

A division process M34 is a process of calculating the reciprocal of the ratio f(θh).

A subtraction process M36 is a process of subtracting the output value of the division process M34 from "1".

A compensation torque calculation process M38 is a process of calculating a Cardan joint compensation torque Tcjc by multiplying the output value of the subtraction process M26 and the output value of the subtraction process M36.

A steering torque calculation process M40 is a process of calculating the steering torque Th by multiplying the detection value Trq by the ratio $f(\theta h)$.

An assist torque calculation process M42 is a process of calculating an assist torque Tb based on the steering torque Th as an input variable. That is, the assist torque calculation process M42 is a process of changing the assist torque Tb depending on driver's steering intention indicated by the steering torque Th.

A variation assist torque calculation process M44 is a process of calculating a variation assist torque Tbc by dividing the assist torque Tb by the ratio $f(\theta h)$.

A superimposition process M46 is a process of calculating an assist torque Ta by adding the variation assist torque Tbc and the Cardan joint compensation torque Tcjc.

A manipulation signal output process M48 is a process of generating and outputting a manipulation signal MS of the inverter 60 for controlling the torque of the assist motor 42 to the assist torque Ta. Actually, the manipulation signal MS is a manipulation signal for each switching element of the inverter 60. The manipulation signal output process M48 is an example of the manipulation process.

Details of Assist Torque Calculation Process M42

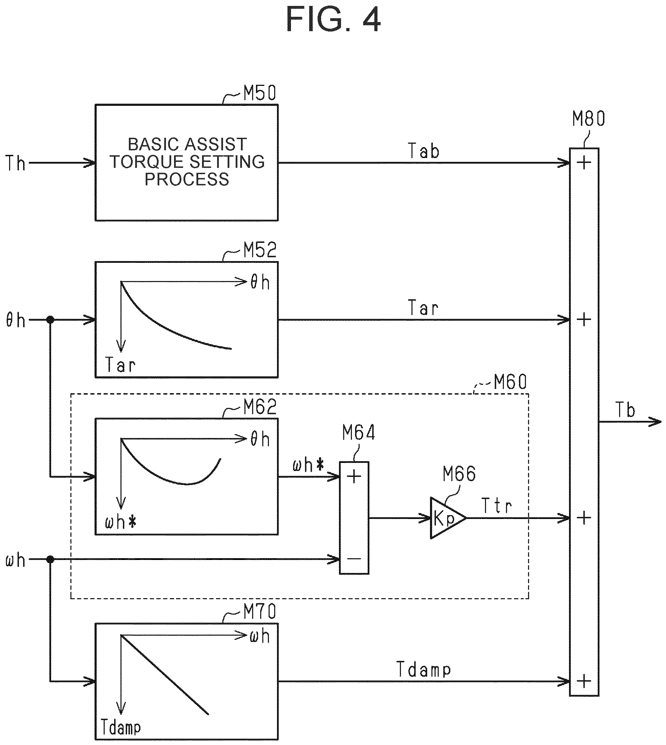

FIG. 4 shows details of the assist torque calculation process M42.

A basic assist torque setting process M50 is a process of calculating a basic assist torque Tab based on the steering torque Th as an input variable. The basic assist torque setting process M50 is a process of changing the basic assist torque Tab depending on the steering torque Th, under the following condition. The condition is a condition that the absolute value of the basic assist torque Tab in the case where the absolute value of the steering torque Th is large is larger than or equal to the absolute value of the basic assist torque Tab in the case where the absolute value of the steering torque Th is small. The basic assist torque setting process M50 is an example of the basic assist torque setting process.

In the description of "B is changed depending on A under the condition that B in the case where A is large is larger than or equal to B in the case where A is small", the case where A is large and the case where A is small mean a relative magnitude relation in the comparison of the two cases. For example, "the case where A is large" corresponds to the case of "A is a first value", and "the case where A is small" corresponds to the case of "A is a second value smaller than the first value". Moreover, the above description means that B in the case where A is the first value is sometimes larger than B in the case where A is the second value depending on the setting of the first value and the second value. Further, the above description means that B is changed depending on A such that A in the case where B is large becomes larger than A in the case where B is small.

An active return process M52 is a process of calculating an active return torque Tar based on the steering angle $\theta h$ as an input variable. The active return torque Tar is a torque for returning the steering angle $\theta h$ to a neutral position. Accordingly, the sign of the active return torque Tar is the reverse of the sign of the steering angle $\theta h$. The active return process M52 is a process of changing the active return torque Tar depending on the steering angle $\theta h$, under the following condition. The condition is a condition that the absolute value of the active return torque Tar in the case where the absolute value of the steering angle $\theta h$ is large is larger than or equal to the absolute value of the active return torque Tar in the case where the absolute value of the steering angle $\theta h$ is small. The active return torque Tar is an example of the return torque variable.

A target backing process M60 is a process of calculating a target backing torque Ttr based on the steering angle and a steering angle velocity $\omega h$ as input variables. The target backing torque Ttr is a manipulated amount for controlling the steering angle velocity $\omega h$ when the steering angle $\theta h$ is returned to the neutral position such that the steering angle velocity $\omega h$ gets close to a target steering angle velocity $\omega h^*$. The target backing process M60 includes a target angle velocity setting process M62, a deviation calculation process M64, and a proportional element M66. The steering angle velocity $\omega h$ is an example of the variable indicating the time-differential value. The target backing torque Ttr is an example of the target backing torque variable. The target steering angle velocity $\omega h^*$ is an example of the target value.

The target angle velocity setting process M62 is a process of setting the target steering angle velocity $\omega h^*$ based on the steering angle $\theta h$ as an input variable. Specifically, the target angle velocity setting process M62 may be a process in which the PU 52 performs the map computation of the target steering angle velocity $\omega h^*$ in a state where map data is stored in the storage device 54. The map data is data in which the steering angle $\theta h$ is adopted as an input variable and the target steering angle velocity $\omega h^*$ is adopted as an output variable. The deviation calculation process M64 is a process of calculating the difference between the target steering angle velocity $\omega h^*$ and the steering angle velocity $\omega h$. The proportional element M66 is a process of substituting a value resulting from multiplying the output variable of the deviation calculation process M64 by a gain Kp, in the target backing torque Ttr.

A damping process M70 is a process of calculating a damping torque Tdamp based on the steering angle velocity $\omega h$ as an input variable. The damping torque Tdamp is a torque for attenuating the vibration of a manipulation system by giving stickiness to the manipulation of the steering wheel 12. The sign of the damping torque Tdamp is the reverse of the sign of the steering angle velocity ωh. The damping process M70 is a process of calculating the damping torque Tdamp depending on the steering angle velocity ωh, under the following condition. The condition is a condition that the absolute value of the damping torque Tdamp in the case where the absolute value of the steering angle velocity ωh is large is larger than or equal to the absolute value of the damping torque Tdamp in the case where the absolute value of the steering angle velocity ωh is small. The active return process M52, the target backing process M60, and the damping process M70 constitute an example of the adjusting torque calculation process. The damping torque Tdamp is an example of the damping torque variable.

A synthesis process M80 is a process of substituting the sum of the basic assist torque Tab, the active return torque Tar, the target backing torque Ttr, and the damping torque Tdamp, in the assist torque Tb.

Operation and Effect of Embodiment

The following Expression (c5) is a motion equation for the pinion shaft 22.

$$\mathrm{Trq + Tm = Gp + Tp \dots (c5)}$$

Here, the inertia term Gp is an inertia term of the torque of the pinion shaft 22. Further, a torque Tp is a torque other than the inertia term Gp that is applied to the pinion shaft 22.

The above Expression (c5) can be expressed as the following Expression (c6).

$$\mathrm{Trq = Gp + Tp - Tm \dots (c6)}$$

When the ratio $f(\theta h)$ in the above Expression (c1) is used, the steering torque Th can be expressed as the following Expression (c7).

$$\mathrm{Th = f(\theta h) \bullet (Gp + Tp - Tm) \dots (c7)}$$

The motor torque Tm that is the assist torque is expressed as Expression (c8).

$$\mathrm{Tm = Tbc + \{1 - (1 / f(\theta h))\} \bullet Tp \dots (c8)}$$

When the above Expression (c8) is substituted in the above Expression (c7), the following Expression (c9) is obtained.

$$\mathrm{Th = Tp + f(\theta h) \bullet (Gp - Tbc) \dots (c9)}$$

When "Tbc = Tb / f(θh)" is substituted in the above Expression (c9), the following Expression (c10) is obtained.

$$\mathrm{Th = Tp - Tb + f(\theta h) \bullet Gp \dots (c10)}$$

In the above Expression (c10), when the term "f(θh)•Gp" is ignored, the ratio between the steering torque Th and "Tp - Tb" does not depend on the steering angle θh.

Therefore, when the variation in the torque Tp depending on the steering angle θh is small, it is possible to restrain the steering torque Th from varying depending on the steering angle θh.

Therefore, in the embodiment, the motor torque Tm is set to the sum of the variation assist torque Tbc and the Cardan joint compensation torque Tcjc. That is, the Cardan joint compensation torque Tcjc is the second term in the right-hand member of the above Expression (c8).

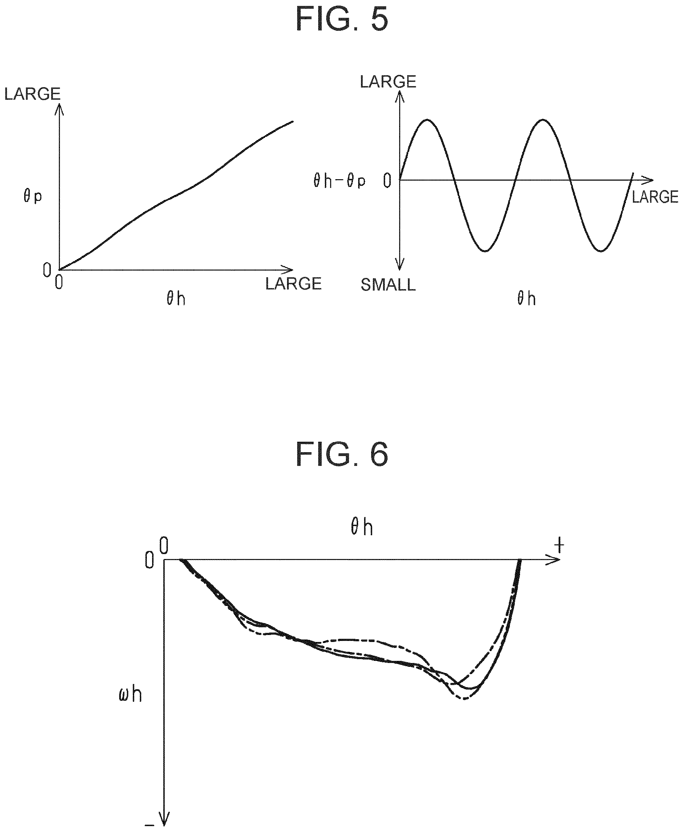

In each of the active return process M52, the target backing process M60, and the damping process M70, the manipulated object is the assist motor 42. Therefore, it is naturally thought that the input variables in the active return process M52, the target backing process M60, and the damping process M70 are set to the pinion angle θp or the time-differential value of the pinion angle θp. According to the above Expression (c2), the relation between the steering angle θh and the pinion angle θp has non-linearity. The left side of FIG. 5 shows the non-linearity relation. Further, the right side of FIG. 5 shows the difference between the steering angle θh and the pinion angle θp with respect to the steering angle θh.

Each of the active return process M52, the target backing process M60, and the damping process M70 is a process for controlling the behavior of the steering wheel 12. Therefore, if the input variable in each process is the pinion angle θp or the time-differential value of the pinion angle θp, there is fear that the behavior of the steering wheel 12 cannot be appropriately controlled.

In this respect, in the embodiment, in each of the active return process M52, the target backing process M60, and the damping process M70, the input variable is set to the steering angle θh or the steering angle velocity ωh. Thereby, the active return torque Tar, the target backing torque Ttr, and the damping torque Tdamp as adjusting torques can be set to appropriate values depending on the steering angle θh or the change rate of the steering angle θh.

FIG. 6 exemplifies the behavior of the steering angle θh due to the target backing process in each of the embodiment and a comparative example. In FIG. 6, the one-dot chain line shows the transition of the target steering angle velocity ωh\*. In FIG. 6, the solid line shows the transition of the steering angle velocity ωh according to the embodiment. In FIG. 6, the two-dot chain line shows a comparative example in which the pinion angle θp and the time-differential value of the pinion angle θp are used as input variables in the target backing process M60, instead of the steering angle θh and the steering angle velocity ωh.

As shown in FIG. 6, in the embodiment, the trackability of the steering angle velocity ωh to the target steering angle velocity ωh\* is improved compared to the comparative example.

With the above-described embodiment, an effect described below is further obtained.

(1) The PU 52 calculates the variation assist torque Tbc by dividing the assist torque Tb by the ratio f(θh). The ratio f varies depending on the steering angle θh. Hence, in the embodiment, the torque of the assist motor 42 is controlled to the torque depending on the value resulting from dividing the assist torque Tb by the ratio f(θh). Thereby, it is possible to restrain the variation in the torque that is applied to the steering wheel in the case where the assist torque Tb is an amount that does not periodically vary depending on the steering angle θh. The ratio f is an example of the ratio variable.

Other Embodiments

The embodiment can be carried out while being modified as follows. The embodiment and the following modifications can be carried out while being combined with each other as long as there is no technical inconsistency.

Turning-Corresponding Angle Acquisition Process

In the above embodiment, the turning-corresponding angle acquisition process is a process of acquiring the pinion angle θp as the variable indicating the turning angle, but the present invention is not limited to this. For example, the turning-corresponding angle acquisition process may be a process of acquiring the displacement amount of the rack shaft 30 in the axial direction of the rack shaft 30.

Basic Assist Torque Setting Process

The assist torque calculation process M42 of calculating the assist torque Tb that does not depend on the steering angle θh is not essential. For example, a process of directly calculating the variation assist torque Tbc using the steering torque Th and the steering angle θh as inputs may be employed.

Target Backing Torque Variable

It is not essential that the target backing variable that is the output variable in the target backing process is the target backing torque Ttr. For example, the target backing variable may be a command value of the electric current that flows through the assist motor 42. Specifically, for example, in the case where the assist motor 42 is a SPM, the target backing variable may be a q-axis current.

Return Torque Variable

It is not essential that the return torque variable that is the output variable in the active return process is the active return torque Tar. For example, the return torque variable may be a command value of the electric current that flows through the assist motor 42. Specifically, for example, in the case where the assist motor 42 is the SPM, the return torque variable may be the q-axis current.

Damping Variable

It is not essential that the damping torque variable as the output variable in the damping process is the damping torque Tdamp. For example, the damping torque variable may be a command value of the electric current that flows through the assist motor 42. Specifically, for example, in the case where the assist motor 42 is the SPM, the damping torque variable may be the q-axis current.

Adjusting Torque Calculation Process

It is not essential that the adjusting torque calculation process of calculating the value of the adjusting torque variable based on the steering angle $\theta$h or the steering angle velocity $\omega$h as the input variable includes the target backing process, the active return process, and the damping process. For example, the adjusting torque calculation process may include only two processes of the three processes. Further, for example, the adjusting torque calculation process may include only one process of the three processes.

The adjusting torque calculation process may include a process other than the above three processes. For example, the adjusting torque calculation process may include a process of calculating the value of a hysteresis torque variable having values that are different between cutting and cutting-back.

Manipulation Process

The input variable in the manipulation process is not limited to the two variables: the value of the adjusting torque variable and the value of the basic assist torque variable. For example, the input variable in the manipulation process may include a torque for restraining a torque ripple that is periodically generated depending on the rotational angle due to the structure of a mechanism that transmits the torque of the assist motor 42 to the turning wheels 36.

First Bend Angle $\alpha_1$, Second Bend Angle $\alpha$2

In the above embodiment, the first bend angle $\alpha$1 and the second bend angle $\alpha$2 are set to fixed values that are previously determined, but the present invention is not limited to this. For example, in the case where the height of the steering wheel 12 can be adjusted by the rotation of the column shaft 14 around a rotation center OT as shown by two-dot chain lines in FIG. 1, the first bend angle $\alpha$1 and the second bend angle $\alpha$2 may be set depending on the rotation amount of the column shaft 14. The cause of the change in the bend angles $\alpha$1, $\alpha$2 is not limited to the change in tilt angle. For example, the cause of the change in the bend angles $\alpha$1, $\alpha$2 may be the use of a telescopic function.

Turning Control Device

The control device 50 is not limited to a device that includes the PU 52 and the storage device 54 and that executes software processing. For example, a dedicated hardware circuit (for example, an ASIC) that executes at least some of the processes that are executed in the above embodiment may be included. That is, the turning control device only needs to include one processing circuit of the following (a) to (c). (a) A processing circuit including a processing device that executes all of the above processes in accordance with programs and a program storing device that stores programs, as exemplified by a ROM. (b) A processing circuit including a processing device that executes some of the above processes in accordance with programs, a program storing device, and a dedicated hardware circuit that executes the other processes. (c) A processing circuit including a dedicated hardware circuit that executes all of the above processes. A plurality of software processing circuits each of which a processing device and a program storing device may be provided, and a plurality of dedicated hardware circuits may be provided. That is, the above processes only need to be executed by a processing circuit that includes at least one of a single or a plurality of software processing circuits and a single or a plurality of dedicated hardware circuits.

Turning Device

The present invention is not limited to the configuration in which the rotation shaft of the assist motor 42 and the rack shaft 30 are disposed so as to be parallel to each other. For example, a second rack-and-pinion mechanism may be included separately from the rack-and-pinion mechanism 32, and the torque of the assist motor 42 may be applied through the second rack-and-pinion mechanism.

Others

It is not essential that the steering angle θh as the input in the ratio calculation process M32 is the output value of the steering angle correction process M33. For example, the steering angle θh output by the steering angle calculation process M30 may be adopted as the input in the ratio calculation process M32.

**Claims**

1. A turning control device configured to control a turning device (10), the turning device (10) including:

   a steering wheel (12);
   an input shaft (14) that is coupled to the steering wheel (12);
   an intermediate shaft (18);
   an output shaft (22);
   a first Cardan joint (16) that is a member that couples the input shaft (14) and the intermediate shaft (18);
   a second Cardan joint (20) that is a member that couples the intermediate shaft (18) and the output shaft (22);
   a turning wheel (36) configured such that a steering torque input to the steering wheel (12) is transmitted through the input shaft (14), the intermediate shaft (18), and the output shaft (22); and
   an assist motor (42) configured to apply a torque to a position that is closer to the turning wheel (36) than to the second Cardan joint (20),

   the turning control device **characterized by** comprising a processor configured to execute:

   a turning-corresponding angle acquisition process that is a process of acquiring a turning-corresponding angle depending on a detection value of a sensor as an input variable, the turning-corresponding angle being a variable indicating a turning angle of the turning wheel (36), the detection value of the sensor being a detection value of a physical amount at the position that is closer to the turning wheel (36) than to the second Cardan joint (20);
   a rudder angle variable estimation process that is a process of estimating a value of a rudder angle variable based on the turning-corresponding angle as an input variable, the rudder angle variable being a variable indicating a steering angle or a time-differential value of the steering angle, the steering angle being an angle of the steering wheel;
   a basic assist torque setting process that is a process of setting a value of a basic assist torque variable depending on the steering torque;
   an adjusting torque calculation process that is a process of calculating a value of an adjusting torque variable based on the value of the rudder angle variable as an input variable; and
   a manipulation process that includes a process of manipulating a drive circuit of the assist motor (42), so as to control the torque of the assist motor (42) to a torque depending on a sum of a torque indicated by the value of the basic assist torque variable and a torque indicated by the value of the adjusting torque variable.

2. The turning control device according to claim 1, **characterized in that**:

   the rudder angle variable includes a variable indicating the steering angle;
   the manipulation process is a process of controlling the torque of the assist motor (42) to a torque depending on a value resulting from dividing the sum of the torque indicated by the value of the basic assist torque variable and the torque indicated by the value of the adjusting torque variable by a value of a ratio variable; and
   the ratio variable is a variable that periodically varies depending on a value of the variable indicating the steering angle as an input variable and that indicates a ratio of the steering torque to a torque at the position that is closer to the turning wheel (36) than to the second Cardan joint (20).

3. The turning control device according to claim 1, **characterized in that**:

   the rudder angle variable includes a variable indicating the steering angle and a variable indicating the time-differential value of the steering angle;
   the adjusting torque calculation process includes a target backing process;
   the target backing process includes a process of setting a target value of the variable indicating the time-differential value, depending on a value of the variable indicating the steering angle as an input variable, and a process of setting a value of a target backing torque variable, depending on a manipulated amount in a feedback control in which the variable indicating the time-differential value is a controlled amount and the target value is a target value of the controlled amount; and
the adjusting torque variable includes the target backing torque variable.

4. The turning control device according to claim 1, **characterized in that**:

the rudder angle variable includes a variable indicating the steering angle;
the adjusting torque calculation process includes an active return process;
the active return process includes a process of calculating a value of a return torque variable for returning the steering angle to a neutral position, based on the variable indicating the steering angle as an input variable; and
the adjusting torque variable includes the return torque variable.

5. The turning control device according to claim 1, **characterized in that**:

the rudder angle variable includes a variable indicating the time-differential value of the steering angle;
the adjusting torque calculation process includes a damping process;
the damping process is a process of calculating a value of a damping torque variable, based on a value of the variable indicating the time-differential value as an input variable;
the damping torque variable is a variable that has a reverse sign of the time-differential value; and
the adjusting torque variable includes the damping torque variable.

FIG. 1

EP 4 603 365 A1

FIG. 2

FIG. 3

# FIG. 4

# FIG. 5

# FIG. 6

Europäisches
Patentamt
European
Patent Office
Office européen
des brevets

# EUROPEAN SEARCH REPORT

**Application Number**

EP 25 15 6790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 311 739 A1 (JTEKT CORP [JP]) 31 January 2024 (2024-01-31) * paragraphs [0018] - [0059]; figures 1-3 * | 1-5 | INV. B62D5/04 |
| | ----- | | |
| A | EP 3 437 960 A1 (JTEKT CORP [JP]) 6 February 2019 (2019-02-06) * paragraphs [0008] - [0011], [0015] - [0025]; figures 1,3,4 * | 1,3,5 | |
| | ----- | | |

**TECHNICAL FIELDS SEARCHED (IPC)**

B62D

The present search report has been drawn up for all claims

| Place of search | Date of completion of the search | Examiner |
|---|---|---|
| The Hague | 23 June 2025 | Kulozik, Ehrenfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 6790

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | | Publication date | Patent family member(s) | | Publication date |
|---|---|---|---|---|---|
| EP 4311739 | A1 | 31-01-2024 | CN | 117446007 A | 26-01-2024 |
| | | | EP | 4311739 A1 | 31-01-2024 |
| | | | JP | 2024016531 A | 07-02-2024 |
| | | | US | 2024034394 A1 | 01-02-2024 |
| EP 3437960 | A1 | 06-02-2019 | CN | 109383615 A | 26-02-2019 |
| | | | EP | 3437960 A1 | 06-02-2019 |
| | | | JP | 2019031126 A | 28-02-2019 |
| | | | US | 2019039640 A1 | 07-02-2019 |

EPO FORM P0459

For more details about this annex : see Official Journal of the European Patent Office, No. 12/82

**EP 4 603 365 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003205846 A